# EUROPEAN PATENT SPECIFICATION

(11) **EP 2 110 656 B1**
(45) Date of publication and mention of the grant of the patent: **06.07.2011**
(21) Application number: 08007319.0
(22) Date of filing: 14.04.2008
(51) Int. Cl.: G01M 17/02

(54) **Apparatus for determining the condition of a wheel assembly**
Verfahren zur Bestimmung des Zustandes einer Radanordnung
Appareil pour déterminer l'état d'un ensemble de roue

(43) Date of publication of application: 21.10.2009
(73) Proprietor: Snap-on Equipment Srl a unico socio, 42015 Correggio (RE) (IT)
(72) Inventor: Sotgiu, Paolo, 41100 Modena (IT)
(74) Representative: Eisenführ, Speiser & Partner

(56) References cited:
- WO-A-96/10727
- US-A- 5 789 668
- US-A1- 2001 052 259
- US-A1- 2004 071 334
- US-A1- 2005 268 707
- US-A1- 2007 124 949
- US-A1- 2008 011 074
- US-B1- 6 539 789

## Description

The present invention relates to an apparatus for determining the condition of a wheel assembly utilizing non-contact data collection and analysis, and more specifically to an apparatus for obtaining data by non-contact measurement to provide a three-dimensional representation for determination of the conditions of the wheel assembly.

### BACKGROUND OF THE DISCLOSURE

The following terms may be used throughout the description presented herein and should generally be given the following meaning unless contradicted or elaborated upon by other descriptions set forth herein.

"Wheel" refers to a generally cylindrical, typical metallic, disc-like mechanical support for supporting a typically pneumatic tire and mounting to a vehicle axle. A wheel has two axially spaced-apart flanges (or annular lips), each flange adapted to securely receive a respective one of the two beads of the mounted tire.

"Tire" is a laminated mechanical device of generally toroidal shape (usually an open-torus) having two beads, two sidewalls and a treaded surface, made of rubber, chemicals, fabric and steel or other materials, and typically inflated with air under pressure. A tire is mounted in the rim bed of a rim (rim being detailed hereinafter).

"Sidewall" of a tire refers to a portion of the tire between the treaded surface (usually the running surface of the tire) and the bead.

The term "rim" refers to the part of a wheel that is made of metal, in particular aluminium, steel, or other alloy, and to which a pneumatic tire, usually made of rubber, is attached. The rim includes a peripherally extending rim bed to which the tire is attached, and a wheel disc portion within the peripherally extending rim bed. That wheel disc portion may have apertures or no aperture at all. The wheel disc may also be formed from spokes.

"Wheel assembly" generally refers to a tire, a combination of a rim and a tire attached thereto, or a wheel.

A non-contact method and a system for analyzing tire conditions by directing radiation to the tire to be examined and sensing reflected radiation is, for example, disclosed in document US 7 269 997 B2.

Document WO 96/10727 discloses a tire scanning apparatus and a corresponding method wherein a frame being equipped with a laser-based scanning means for emitting light of certain properties to a tire a vehicle wheel and means for rotating the vehicle wheel. The apparatus can be positioned under the vehicle wheel under test when the vehicle is lifted to a certain extent and the tire of interest is freely rotatable. The sensor receives the reflected light from the surface of the tire under test and three-dimensional information about the profile of the tire is obtained. That is, tire tread data are picked-up when the tire (vehicle wheel) is rotated at for at least one rotation. The output signal of the sensor is converted into a corresponding digital signal from which three-dimensional data can be derived. A display means allows the display in false colors of the digital data showing a detail height and depth profile of the tire as measured.

Document US 5 789 668 discloses an apparatus and related method for obtaining tire profile including the tread and both sidewalls, wherein a tire to be measured is mounted on a horizontal axle or shaft and secured thereto. The tire is rotated by a drive means, and when the tire rotates and its rotation is controlled by a rotary encoder a non-contacting probe such as a laser probe, is positioned to the tire in such a manner that both sidewalls and the tread surface can be scanned. The probe may be a laser-base probe, and three-dimensional information about the tread of the tire (in general the tire condition) can be obtained. This may form the basis for a three-dimensional representation about the conditions of the tread surface of the tire for the operator.

Document US 2004/0071334 A1 discloses a device and a method for quality controlling a body and a three-dimensional recording of the shape of the body is obtained. Specifically, a height representation of the surface of the body is derived from the picked-up data. Further data indicative of the condition of the controlled body can be provided after processing of the picked-up data, so that variations of the surface height and any unevenness can be detected. Specific detection region can be defined. The device and method can be used for controlling the tires of vehicles for safe quality control.

Document US 6 539 789 B1 discloses a detection of irregularities in a convex surface such as a tire sidewall, using band-pass filtering, wherein a radiation emitting device is placed close to the side of the tire under test to send illumination beams to a sidewall of the tire and obtain a recording of the reflected radiation by an image sensor. Upon corresponding data evaluation the detection system is able to analyze specific areas of identified regions where irregularities have been detected and exceed a predetermined threshold value or a predetermined area of the tire under test. The system is used for quality control.

Document US 2005/0268707 A1 (corresponding to document US 7 269 997 B2) disclosed the analysis of the tire of a vehicle wheel including the tread and both sidewalls thereof. Plural light sources and detectors are provided for detecting the different surfaces of interest of the tire, and height information is obtained forming the basis for an image showing the height profile of the measured surfaces of the tire. Specifically, a three-dimensional representation can be obtained. Moreover, a color coding of the different type of the tread surface of the tire can be derived from the picked-up data when assigning different color to different heights as measured, and a corresponding surface profile of the tire based on the height information and the assigned color can be provided on a display means.

### SUMMARY OF THE DISCLOSURE

The disclosure according to the present invention presents a non-contact measurement and data evaluation concept for determining a condition of a wheel assembly, basically including a tire and a rim. The tire fundamentally represents a rotational axis and a treaded surface disposed between two sidewalls. The non-contact measurement system is used to obtain and determine geometrical parameters of the wheel assembly, that is, of the tire and/or the rim.

An exemplary apparatus according to the present invention may include an emitter source for emitting radiation signals towards the tire. At least one detector is provided for receiving signals reflected from the wheel assembly in response to the emitted radiation signals. The reflected signals are fed to a data processing device, such as a computer for running a predetermined program, to determine conditions of the wheel assembly. The data processing device obtains geometrical information, such as height or depth relative to a reference baseline, of a plurality of points on the wheel assembly based on the signals received from the at least one detector. The plurality of points may be located on a tire extending in a direction from one of the sidewalls of the tire to the other and including the treaded surface thereof, or may be located on the rim of the wheel assembly extending from the rotational axis of the wheel assembly arranged, for example, on a wheel balancing apparatus, to the edge of the rim. The detection or non-contact measurement concept performs measurement along a path which may be parallel to the rotational axis of the wheel assembly or may be in a radial direction from the rotational axis to the outer periphery of the wheel assembly.

More specifically, the geometrical information is based on the shape of the surface of the wheel assembly, and a surface profile of at least a part of the wheel assembly (or the complete wheel assembly) is generated based on the height information obtained by the non-contact measurement concept.

Moreover, on the basis of the information obtained and related to the different heights of a plurality of points located on the surface of the wheel assembly or a portion thereof, different colors can be assigned to different heights of the surface structure, and the generated surface profile of at least a portion of the wheel assembly is displayed as a three-dimensional representation.

In more detail, information related to different colors assigned to different heights is accessed, and a three-dimensional data set indicative of the height information is obtained. A surface profile of at least a part of the wheel assembly based on the three-dimensional data set and the assigned colors is generated and then displayed.

To this end, a display means is provided for displaying the surface profile with the colors and the three-dimensional structure to obtain the three-dimensional representation (color-coded topography of the object under examination) which enables the skilled person, user or operator to easily identify or recognize any wear of the tire and any deformation or a damage of the wheel assembly.

In order to determine the condition of the wheel assembly, wear conditions or damages of different portions of the tire and the rim, or the complete wheel assembly, are compared with each other so that it can be determined whether the tire has uneven wear, and whether, for example, the tire has been operated over-inflated or under-inflated.

Regarding the determination of the condition of the tire, the measurement concept may include the measurement of the complete treaded surface of the tire and generating a surface profile showing respective heights or depths on the surface of the tire. For example, the surface of the tire can be scanned by rotating the wheel assembly including the tire for 360 degrees (at least one revolution of the wheel assembly). During the rotation, the emitter source continuously or intermittently emits radiations on the wheel assembly, and the at least one detector continuously or in a corresponding intermittent manner obtains (receives) signals reflected from the tire or the wheel assembly. A surface profile showing the complete circumferential surface is then created.

According to a particular aspect of the present invention, the height/depth information may be shown on a display means using the different colors assigned to a particular height, and the display shows the height distribution on the tire surface for easy recognition by the user or operator. The profile may further include height information of the sidewalls of the tire so that a bulge on the sidewalls of the tire or any other deformation or irregularity can be determined or observed based on the established surface profile of the tire.

According to the present invention the surface profile may cover the complete surface of the tire and the surface of the rim or at least a part thereof.

The emitter source may be adapted for obtaining the height information by scanning the surfaces of the wheel assembly while the wheel assembly is rotated by at least one revolution.

The data processing means may be adapted to classify the height information of the wheel assembly into a plurality of height sections, and to assign to each of the plural height sections a predetermined color.

The data processing means is adapted to generate the surface profile of the tire along the circumferential treaded surface of the tire or at least a portion thereof, and the data processing means may be adapted to generate the surface profile of the tire along a first and a second sidewall of the tire.

The apparatus may further comprise a rotary angle detector for detecting a rotary angle of the wheel assembly when rotated.

The emitter source may be adapted to emit radiation signals towards the wheel assembly, and the at least one detector may be adapted for receiving signals reflected from the wheel assembly in dependence of the actual rotational angle detected by the rotary angle detector.

The data processing means of the apparatus may be adapted for controlling the operation of the emitter source and the at least one detector, and may be adapted for controlling the rotation of the wheel assembly depending upon the operation of the emitter source and the at least one detector.

The present invention also refers to a wheel balancing apparatus which may include a mounting means to which a wheel assembly having a rim and a tire is rotatably mounted on a measuring shaft extending from the mounting means, and may further include an apparatus for determining the condition of the wheel assembly as described above.

Still other advantages of the presently disclosed apparatus will become readily apparent from the following detailed description, simply by way of illustration of the invention and not limitation. As will be realized, examples illustrated herein are capable of other and different embodiments, and their several details are capable of modifications in various obvious respects, all without departing from the disclosure. Accordingly, the drawing and the description are to be regarded as illustrative in nature, and not as restrictive.

### BRIEF DESCRIPTION OF THE DRAWINGS

The accompanying drawings, which are incorporated in and constitute part of the specification, illustrate exemplary embodiments,
Figs. 1A and 1B show an overall view of an exemplary non-contact analytic system for determining the condition of a wheel assembly,
Fig. 2 depicts details of the exemplary non-contact analytical system shown in Fig. 1A,
Fig. 3 is an exemplary stripe profile of a tire covering the complete surface between an inner and an outer bead (cross-sectional view),
Fig. 4 is a top view of the treaded surface of the wheel assembly (tread pattern),
Fig. 5 depicts an example of a comparison between a measured profile with a standard profile (tread pattern) of the wheel assembly,
Fig. 6A shows a diagram depicting the relationship between a detected height on a scannable surface, a height section and a predetermined allocated color,
Fig. 6B shows a three-dimensional representation of a surface profile of a tire including color-coding of the heights,
Fig. 7 shows a development drawing of a plane view of the surface profile of a tire including color-coded heights,
Fig. 8 shows a cross-sectional representation of the worn portions of a surface profile of a tire,
Fig. 9 shows a schematic view of the surface profile of a tire representing a flat spot,
Fig. 10 shows a three-dimensional surface profile of a tire indicating a bulge on the sidewall of the tire, and
Fig. 11 shows a three-dimensional color-coded representation of a surface profile of a rim including the representation of a damaged portion of the rim (rim scratch).

### DETAILED DESCRIPTION OF ILLUSTRATIVE EMBODIMENTS

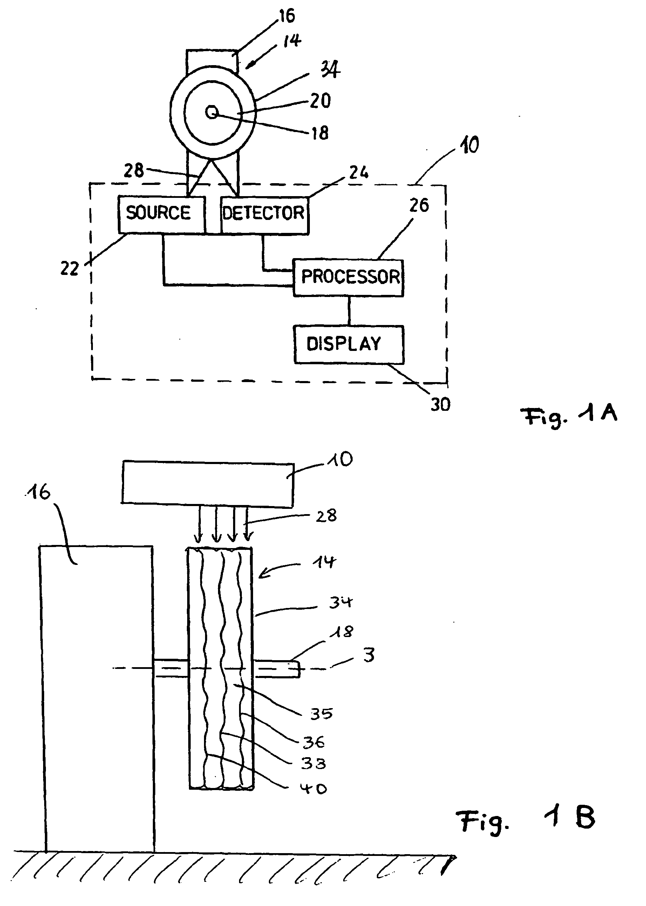

Figs. 1A and 1B refer to a first embodiment of the present invention and show an exemplary apparatus 10 (non-contact analytic system) for determining the condition of a wheel assembly 14 (vehicle wheel assembly) basically including a tire 34 and a rim 20, by analyzing a profile of the tire 34 or the wheel assembly 14 as a whole or in part, including geometrical information, such as height and/or depth, related to various points of the tire 34 or of the complete wheel assembly 14.

Moreover, Fig. 1B shows the surface of the tire 34 of the wheel assembly 14 of which the profile is being created by the non-contact measurement concept according to the present invention. The wheel assembly 14 includes the tire 34 as well as the rim 20 (see Fig. 1A) to which the tire 34 is mounted. The tire 34 includes two beads, two sidewalls and a treaded surface 35, wherein the treaded surface 35 includes tread patterns 36, 38 and 40.

As is shown in Figs. 1A and 1B, the apparatus 10 for detecting the condition of a wheel assembly 14 according to the present invention includes a rotary mounting 16 with a driven axle 18 for the wheel assembly 14 to be attached thereto, an emitter source 22, such as a laser, a plane of light, LED light, ultrasonic waves, etc., as well as at least one detector 24 such as cameras, a charged coupled device CCD or CMOS detectors, and a data processing device 26 such as a computer for running corresponding software to carry out the data evaluation of the detection signals of the at least one detector 24. By emitting radiation signals towards the wheel assembly 14, such as laser illumination light or ultrasonic waves, and by analyzing the signals reflected by the surface of the wheel assembly 14, the at least one detector 24 picks-up the reflected signals, and the reflected signals are provided to the data processing device 26 for creating a profile of the surface of the wheel assembly 14, including, for example, the shape and/or depth of tread patterns 36, 38, 40, the sidewalls, beads of the tire 34 and of the rim 20 constituting the wheel assembly 14, and outputs signals or data of an image representing the profile to be shown on a display means 30. The display means 30 may be a screen such as a CRT (cathode ray tube), or a LCD (liquid crystal display). The emitter source 22 radiating radiation signals to the wheel assembly 14 may include one or more emitting elements arranged in different positions along the width and different angles around the wheel assembly 14 to achieve better scanning of the wheel assembly and better detection of the reflected signals.

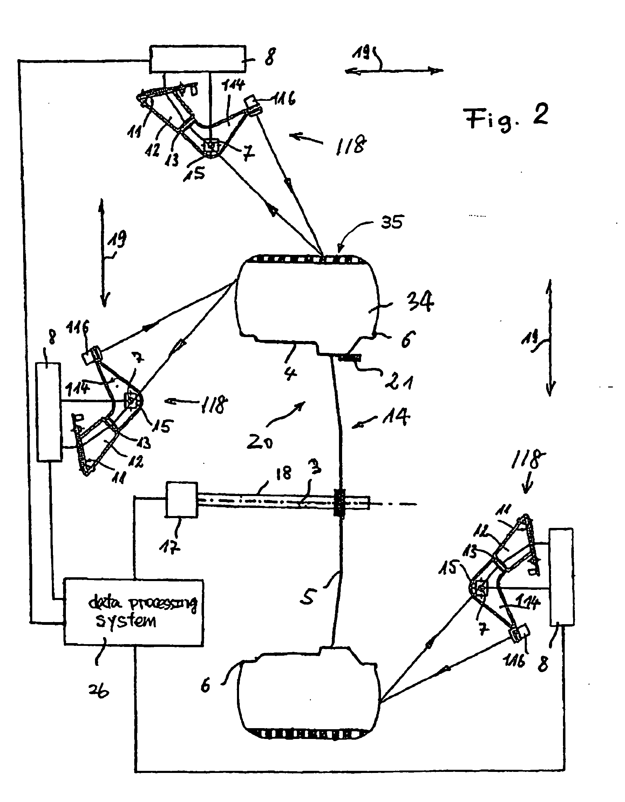

Fig. 2 shows further details of the apparatus 10 for determining the condition of a wheel assembly 14 which has a wheel disc portion 5 and a rim bed 4 fixed to the periphery of the wheel disc portion 5. The tire 34 is mounted on the rim bed 4. Tire beads are supported in a known manner at rim flanges 6 of the rim bed 4. The rim bed 4 and the wheel disc portion 5 form a rim 20. The wheel assembly 14 is fixed in a known manner to the measuring shaft 18 which forms part of, for example, a wheel balancing apparatus. The measuring shaft 18 rotatably supports the wheel assembly 14 and extends along an axis 3 of rotation of the wheel assembly 14. For fastening the wheel assembly 14 to the measuring shaft 18 for free rotation, the wheel assembly 14 is clamped in a centered position so that the measuring shaft 18 coincides with the wheel axis 3 of the wheel assembly 14 so that only rotation of the wheel assembly 14 is allowed while the axis of the wheel assembly (wheel axis 3) is stationary.

Parameters related to the wheel assembly 14 are measured by at least one detector 14 which may constitute of plural detector devices 118, and the output signals of the respective detector devices 118 are supplied to the data processing device 26 for further data evaluation and specific calculations. Each of the plural detector devices 118 of the at least one detector 24 includes an emitter source 116, such as a laser or any other illumination means, or an ultrasonic transmitter, as well as a receiver 12, such as a CCD-detector serving as a position-sensitive receiving element. The emitter source 116 and the receiver 12 are fixed to a carrier 114, which is supported pivotably about a pivot axis 7. The carriers 114 can move along the direction indicated by respective arrows 19 shown in Fig. 2, or on a predetermined guide path with respect to the measuring shaft 18.

The pivotal movement and the optionally additional linear or guided movement can be implemented by means of a drive (not shown), such as one or more stepping motors or other actuators. A receiver optical system 13 is also provided on the carrier 114. The receiver optical system 13 and the CCD-detector 11 are constituent parts of the receiver 12.

An emitter source 116 emits, for example, a light beam 28, such as a stripe beam as shown in Fig. 1B, onto the surface of the tire 34, forming part of the wheel assembly 14, and including, for example, a tire tread, sidewalls of the tire, the rim 20, etc. The light beam 28 emitted by the emitter source 116 of each of the plurality of detector devices 118 is then reflected by the surface illuminated by the light beam 28, and for example by the tire tread, and passes through the receiver optical system 13 on the particular detector elements of the CCD-detector 11. The CCD-detector 11 is adapted for detecting local maxima of an illumination intensity function (distribution function of a light intensity distribution relative to the illuminated portion of the tire 34), independently of each other. The direction of the reflected light beams depends on the distance of the scanned location on the tire (illuminated location or area on the tire 34 or the wheel assembly 14) with respect to the emitter source 116 and with respect to the corresponding receiver 12.

Based on the distance, the reflected beam is received by the receiver optical system 13 onto a given location of the CCD-detector 11 and is converted into a position-sensitive or position-dependent signal. To this end, the CCD-detector 11 may be provided in the form of a radiation sensor having a plurality of sensor portions to obtain the necessary illumination distribution relative to the scanned surface. The signal is passed to an electronic measuring device 8, which is further connected to a position detector 15. Position detector 15 supplies the electronic measuring device 8 with position signals that are representing the respective position of the emitter source 116 and the CCD-detector 11. The emitter source 116 and the respective receiver 12 are capable of moving together with each other as they are fixed to the common carrier 114. The position signals are related to a predetermined reference position known to the system, and are thus related to the measuring shaft 18 to which the wheel assembly 14 is rotatably fixed. The electronic measuring device 8 produces measurement signals of the wheel assembly 14, and the measurement signals are based on the scanning by the light beam 28 emitted by the respective emitter source 116.

The surface of the wheel assembly 14, including the tire 34 and the rim 20, can be detected by the plural detector devices 118 associated with the inside surface (left-hand detector device 118 in Fig. 2), the outside surface (right-hand detector device 118 in Fig. 2), and the treaded surface (upwardly disposed detector device 118 in Fig. 2) of the wheel assembly 14. It is also possible to use only one detector device 118 which may then be adapted to flexibly move to suitable measuring positions on a predetermined guide path to the inside, the outside and also to the treaded surface 35 of the wheel assembly 14.

The respective rotary angle position of the wheel assembly 14 can be determined by a rotary angle detector 17, which is connected to the measuring shaft 18, and supplies rotary angle increments to the data processing device 26 indicating the rotary movement of the wheel assembly 14. The data sensed by the rotary angle detector 17 include an information related to the respective rotary angle positions of the wheel assembly 14, which is being scanned by the respective detector device 18, and specifically during the scanning process. The rotary angle detection requires a reference position, which can be applied to the wheel assembly 14 at a predetermined position and which is then fixed for the subsequent measurement, or , for example, the tire inflation valve 21 can serve as a scan reference when the detector device 118 scans the wheel assembly 14 to determine the (absolute) rotary angle location of the wheel assembly 14 rotatably mounted to the measuring shaft 18.

As shown in Fig. 1B, the emitter source 22 emits a well-defined light beam 28 (stripe of light) having a uniform intensity on the surface of the tire (in Fig. 1B, for example, on the treaded surface 35 of the tire 34). The light signals reflected from the surface of the wheel assembly 14 are received by the detector 24 which generates corresponding detection signals based on the received light signals, and sends these detection signals to the data processing device 26 for further data evaluation and for specifically analyzing the profile of the surface of the wheel assembly 14. That is, a height information is obtained including respective heights of a plurality of points located on the surface of the wheel assembly 14 based on the detection signals received from the at least one detector 24.

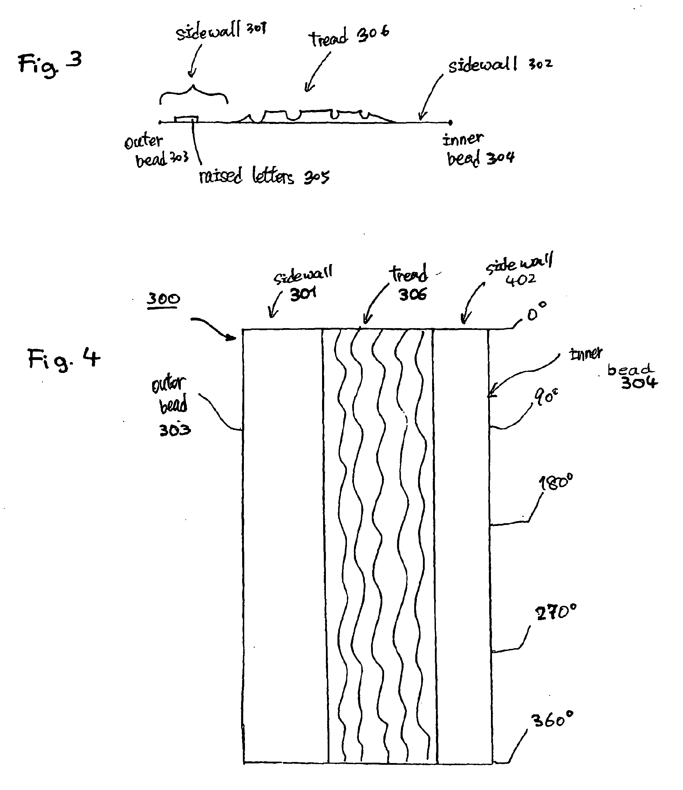

The data processing device 26 generates a stripe profile for a stripe portion of the wheel assembly 14 illuminated by the emitted light 28 of the (light) emitter source 22. An example of such a stripe profile is shown in Fig. 3. The stripe profile of Fig. 3 is an exemplary stripe profile of each side (surface) of the tire 34 and includes two sidewalls 301 and 302, an outer bead 303, an inner bead 304, and a tread 306 (treaded surface 35) of the tire 34. Raised letters 305 moulded on one of the outer sidewalls 301 or 302 of the tire 34, such as the brand of the tire 34 and the size thereof, can also be recognized. The depth of the tread 306 of the tire represents a depth along a plane perpendicular to the surface of each measuring point on the wheel assembly 14 (specifically the tire 34) and is calculated by processing corresponding data (detection signals of the detector devices 18) by means of the data processing device 26. According to a further aspect of the present invention the stripe profile may also include the surface structure of the rim 20. In this case, data evaluation is also performed on the output signals (detection signals) of the respective detector device 118 arranged for scanning the surface of the rim 20.

A complete scan of the surface of the wheel assembly 14 by the emitted light beam 28 is made by rotating the complete wheel assembly 14 for 360 degrees relative to the measuring shaft 18 (driven axle) and corresponding to the wheel axis 3 (Fig. 2). A calibration of rotational positions of the wheel assembly 14 can be determined based on certain marks on the wheel rotational position, such as marks applied to the wheel assembly 14 by the operator before measurement, by consideration of the position of the tire inflation valve of the wheel assembly 14, or by considering the output signals (detection signals) of the rotary angle detector 17.

Based on the reflected light signals received during the complete scan of the wheel assembly 14 (scanning during complete rotation thereof) the data processing device 26 generates a complete profile 300 of the wheel assembly 14 which is shown as an example (plan view) in Fig. 4. The complete profile 300 of the wheel assembly 14 includes the sidewalls 301 and 302, the tread 306, the outer bead 303 and the inner bead 304, corresponding to the arrangement shown in Fig. 3. According to one aspect of the present invention, the complete profile 300 of the wheel assembly 14 may include the complete profile of the rim 20.

The display of the complete profile of the wheel assembly 14 may be color-coded, which means that color is used for displaying particular conditions of the scanned surfaces of the wheel assembly 14. For example, the tread 306 and the sidewalls 301 and 302 are displayed using different colors representing different heights and depths. Color-coded display of the profile allows a user to determine a potential problem of a wheel assembly 14 more easily. For instance, a bulge on the sidewall 301 can be shown using different colors to depict the difference (in height) from the other portions of the sidewalls 301, so that the user can easily determine the deformation of the wheel assembly 14, and in the present case of the tire 34.

A diagnosis of the wheel assembly 14 is conducted by the data processing device 26 by comparing the generated complete profile 300 of the wheel assembly 14 with, for example, processing data stored in a data storage device of the data processing device or in a remote data base through a network connection. The data processing device 26 determines the conditions of the vehicle wheel assembly 14 and, thus, problems of the wheel assembly 14 based on deviations of the measured profile relative to the standard profile or ideal profile (for example new condition) taken from stored information.

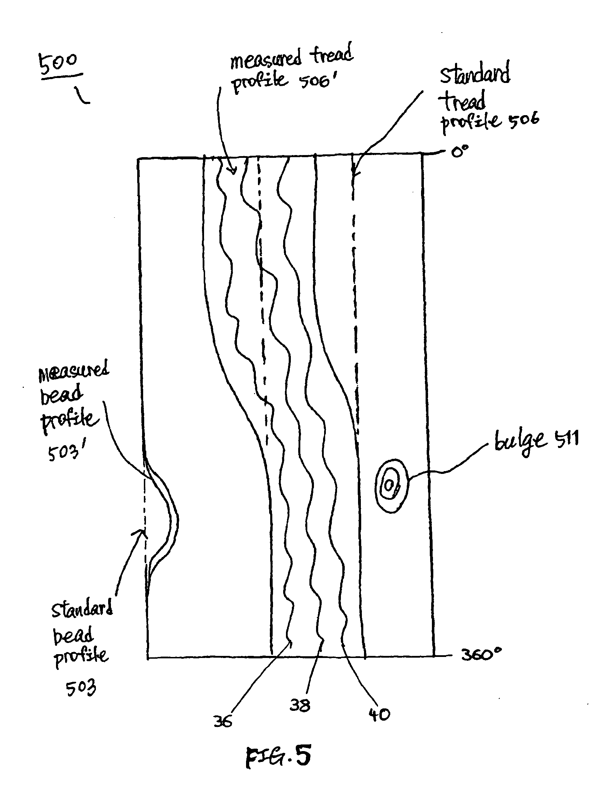

An example of a comparison between a measured profile 500 with a standard profile of a wheel assembly 14 is depicted in Fig. 5. A standard tread profile 506 and a bead profile 503 are shown in dotted lines. As shown in Fig. 5, the measured tread profile 506' and bead profile 503' respectively deviate from the locations of the standard tread profile 506 and the bead profile 503. The deviation in the measured tread profile 506' indicates that the wheel assembly 13 may have a bent rim 20 or a crooked tire 34. The deviation in the measured bead profile 503' indicates that the wheel assembly may have unseated bead. The measured profile 500 also shows a bulge 511 which has heights that deviate from the standard sidewall profile (level difference), and is preferably shown in multiple colors different from other part of the sidewall if a color-coded display is to be used. A diagnostic report may be generated by the data processing device 26 upon further data evaluation of the measured profile 500 with the standard profile of the corresponding portion of the wheel assembly 14.

Furthermore, the complete profile 300 of the wheel assembly 14 as scanned by the plural detector devices 118 is evaluated and presented as a cross-sectional profile (Fig. 3) of the wheel assembly 14 to enable diagnosis of a condition of the wheel assembly 14. For example, the determination of a tire condition may be made by obtaining a cross-sectional profile of the tire 34 concerned. Deviations from a standard cross-sectional profile of the same type of tire (obtained by means of reference to a data base for any stored data) can be determined. The cross-section of the wheel assembly 14 may be parallel to a radial surface passing through the rotational axis 3 of the wheel assembly 14 (see Fig. 2). The cross-sectional profile is used to determine the tire wear conditions of different locations or portions on the tire 34. The wear conditions at different locations of the tire 34 are compared with each other to determine whether the tire 34 has an uneven wear, and whether the tire 34 has been operated or run over-inflated or under-inflated.

In one aspect of the present invention, a wear condition comparison is made between points located on one side of a centerline of the circumferential surface of the tire (mostly includes the treaded surface), with points on the other side of the centerline. If a significant difference exists, it is determined that the tire has an uneven wear. In another aspect of the present invention, a wear condition comparison is made between points inside a region extending from the centerline of the circumferential surface to the sidewalls for a prescribed distance, such as a belt-shape area along the circumferential centerline of the tire, and points outside this region. If the tire wear in the region is more severe than points outside this region, it is determined that the tire has been operated or run over-inflated. Otherwise, the tire has been operated or run under-inflated.

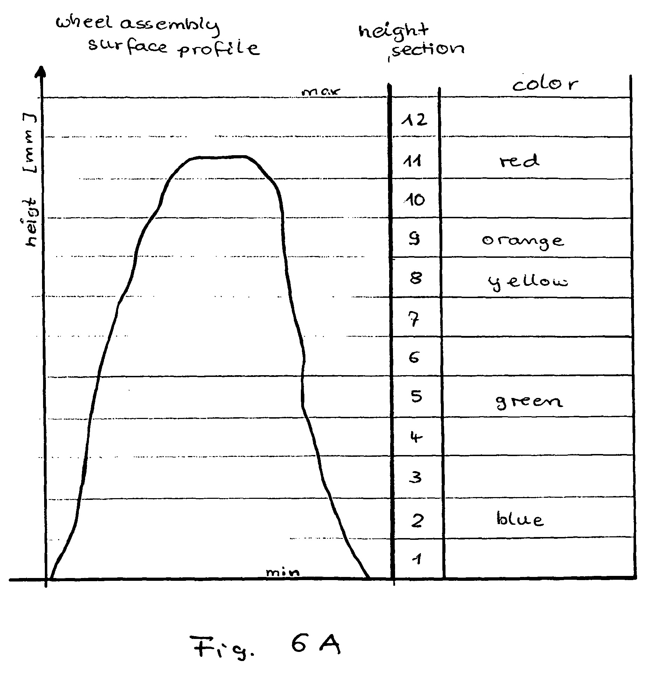

Regarding the profile of a wheel assembly 14 representing the actual condition of the wheel assembly 14, and in particular the profile of the tread 35 of the tire 34 (Fig. 1 B), Fig. 6A shows the allocation of different colors to different heights of the treaded surface (treaded portion) 35 of the tire 34. Fig. 6A shows a general configuration as tested and scanned having different heights, as well as the classification of the particular color to a particular height. In the example shown in Fig. 6A preferably twelve different colors may be used to describe height of the measured profile 500 (Fig. 5) of the tire 34.

The structure of Fig. 6A having different heights represents a cross-sectional view and ranges from a lower portion assigned to color 1 (dark blue) to a maximum height assigned to color 12 (dark red). The different heights detected by the apparatus according to the present invention are assigned to a height section (1 to 12 in Fig. 6A) to which a specific color is assigned. The classification of the detected height into a height section (for example, 1 to 12 as shown in Fig. 6A) constitutes a data set for representation on a display using the different colors from dark blue to dark red as illustrated in Fig. 6A. When the surface structure of the tire 34 under measurement is displayed, the display portion of the structure having a certain height and being assigned to a certain height section is displayed in the specific color assigned to that height section. That is, when the operator of the apparatus 10 for determining the condition of a wheel assembly 14 has carried out a corresponding measurement and has obtained the above-described data set (Fig. 6A) the specific portion of the displayed profile of the treaded surface 35 of the tire 34 is displayed in the particular color so that the operator can easily recognize that this display portion having a particular color has a particular height assigned to this color.

Since the allocation of a certain height according to the measurement to a certain height section (1 to 12 in Fig. 6A), and since this corresponds to the allocation of a certain color, and since this allocation concept is maintained constant for a particular measurement or a measurement sequence, the color-coded display will provide an easy recognizable representation of the condition of, for example, a treaded surface 35 of the tire 34 under examination.

The representation shown in Fig. 6A only represents the cross-sectional view for explaining the allocation of detected height, a detected height section and a corresponding display color.

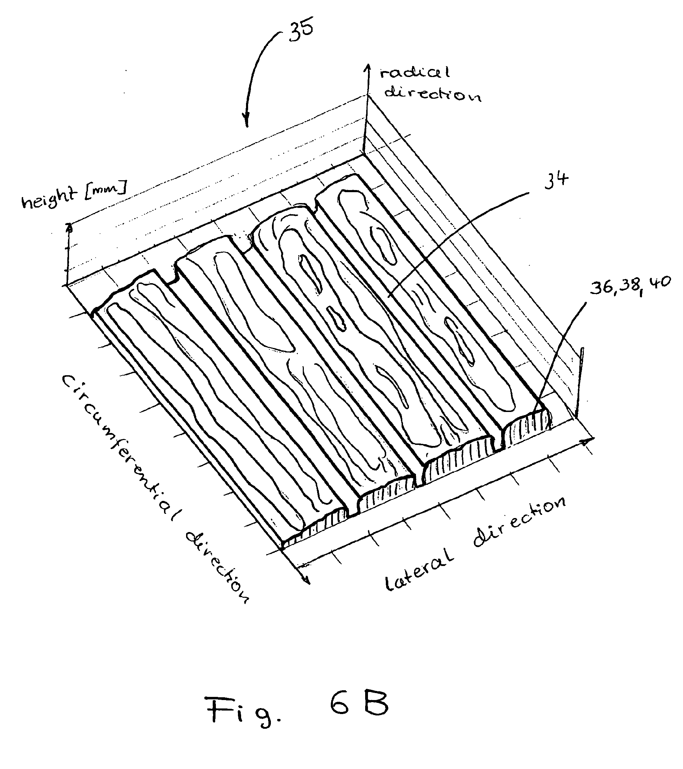

According to Fig. 6B, the data set is further evaluated to obtain a three-dimensional representation or image on the display means 30 (Fig. 1A). During the measurement, that is, during the scanning of the complete treaded surface 35 of the tire 34, the wheel assembly 14 is rotated to perform at least one revolution so that the complete circumferential treaded surface 35 (tread portion) of the tire 34 can be scanned.

To obtain an information about the rotational position of the wheel assembly 14, the above-described rotation angle sensor 17 (Fig. 2) is provided. More specifically, when the circumferential surface (treaded surface 35) of the tire 34 is scanned, each scanning section of the treaded surface is assigned to a certain angle, so that from the scanned height information and the classification of colors a further data evaluation is carried out for obtaining a three-dimensional data set indicative of the height information on the complete treaded surface 35 (circumferential surface) of the tire 34.

The three-dimensional configuration is obtained by providing a profile of the whole surface of the tire 34 in a first direction which is the lateral direction of the treaded surface 35 of the tire 34 in a direction parallel to the rotational axis 3 (see Fig. 1B and 2) of the wheel assembly 14, the extension of the treaded surface 35 of the tire 34 as the outer cylindrical surface thereof in circumferential direction, and the height of the tread pattern in the radial direction extending from a certain radius relative to the rotational axis 3 of the wheel assembly 14 to the outer side.

A corresponding profile of the treaded surface 35 of the tire 34 is shown in Fig. 6B, this figure depicting a portion of a complete profile.

While the measured values (height information and information related to different colors assigned to the different heights) are based on measured data along the complete treaded surface 35 of the tire 34 and therefore constitute a cylindrical ring having the radius of the tire and the lateral dimension according to the lateral size (width) of the tire 34, the representation shown in Fig. 6B is provided in a form of a development drawing (developable surface). The height dimension (radial direction) refers to the height of the tread pattern in mm or in inch. The lateral dimensions in the direction of the rotational axis 3 of the wheel assembly 14 may also have the dimension of mm or inch. The direction along the cylindrical shape of the treaded surface 35 of the tire 34 may be shown with the dimension of mm or inch, or in degrees of the rotational position in a range from 0 to 360 degrees of the possible rotational movement of the wheel assembly 14 during the complete scanning operation.

The complete profile of the treaded surface 35 of the tire 34 shows areas of different colors depending upon the height of each treaded structure (tread pattern) on the treaded surface 35 and the allocation of this particular height to a height section and a corresponding representation color for display.

Accordingly, the surface profile of the treaded surface 35 of the tire 34 based on a three-dimensional data set for indicating the respective height information shows to the operator or skilled person a particular arbitrary location on the treaded surface 35 of the tire 34 and the corresponding height of the treaded structure at this location. In addition to this perspective view a color coding of the detected height is presented to the operator so that in consideration of an unambiguous allocation of a certain color to a predetermined height (and height section) of the treaded surface 35 in question the condition of the tire 34 and specifically the wear of the tire 34 at this particular location can easily be recognized. The surface profile of Fig. 6B, therefore, includes a complete information about the condition of the tire 34 forming part of the wheel assembly 14. That is, different colors adjacent to each other show different heights of the tread of the tire 34 and, thus, a damaged portion or a wear of the tire 34.

The color assignment or color allocation shown in Fig. 6A and 6B is merely an example for such an assignment of height to a range and a color, and the present invention is not limited to this assignment as the allocation of other colors is considerable as long as such a color coding concept provides an unambiguous assignment of color, height section (range) and detected height. The use of more colors and corresponding height sections increases the resolution of the displayed heights. In this connection the different multiple colors must still be easily distinguishable when displayed on the display means 30.

In Fig. 6B the scale for the lateral direction and the circumferential direction depends on a the size and type of the tire 34. The scale of the height in the radial direction for specifically characterizing the condition of the treaded surface 35 of the tire 34 may cover the range from the lowest possible predetermined value (which may constitute a kind of reference point) to a maximum possible value which may correspond to the maximum possible height of any treaded structure of the tire 34. In this case the condition of the tire 34 and specifically the wear thereof can be recognized relative to the optimum conditions or the ideal conditions.

The present invention also covers the case where the scale is defined depending upon the detected heights of the treaded surface 35 of the tire 34. That is, the scale and more specifically the range to be covered by the representation in Fig. 6B is defined by the actual measurement of the lowest portion and the highest portion of any treaded structure (tread pattern) on the treaded surface 35. In this case, the representation shown in Fig. 6B mainly covers (based on a slightly higher resolution) the maximum differences that may occur when the complete treaded surface 35 of the tire 34 is measured (scanned in conjunction with at least one revolution of the wheel assembly 14).

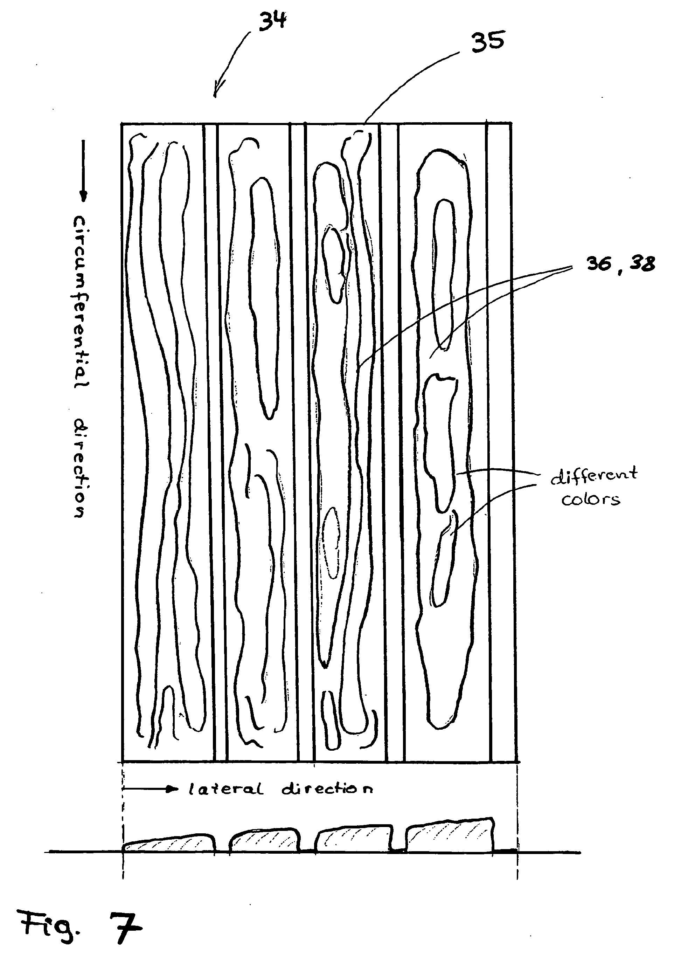

Fig. 7 shows a two-dimensional representation of the developable surface of one complete surface profile according to a portion of one revolution of the wheel assembly 14 in a plan view, wherein the height information is represented by the different colors. Areas having the same colors are assigned to the same height section and, thus, to basically the same height detected on the treaded surface 35. This representation shows any different or irregular wear of the tire 34 based on any uneven run of the tire or any runout of the tire 34 itself or the whole wheel assembly 14. This representation indicates different wear depending on the degree of revolution of the tire 34 (wheel assembly 14) along a rotational axis 3 thereof.

It is preferred to have the same color coding for the different heights or height sections as measured as is shown in Fig. 6A. A skilled person can obtain a complete information about the actual condition of the tire and/or the wheel assembly 14 when considering the representations of Figs. 6B and 7 after a measurement process involving at least one complete revolution of the wheel assembly 14 to be examined.

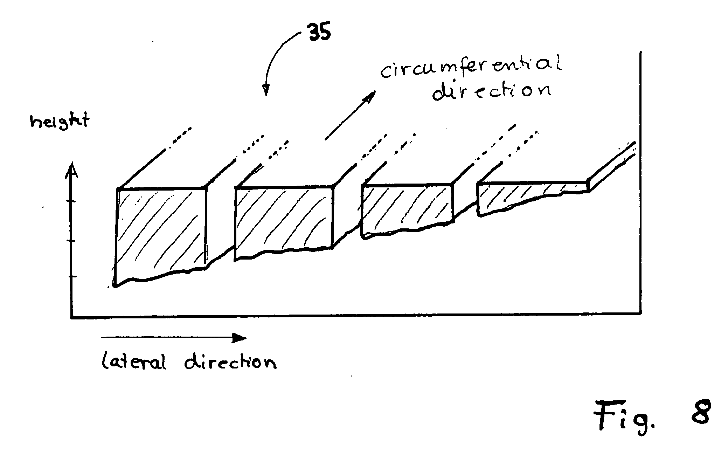

According to a second embodiment of the present invention, the representation shown in Fig. 6B may be provided in the form of a representation indicating the differences between the actually measured tire 34 (treaded surface 35 thereof) and the ideal treaded surface of the tire 34 in the new condition (without any wear). A corresponding situation is shown in Fig. 8.

In this case, the complete scale and the respective allocation of different colors is applied to such a representation indicating the height or thickness of the portions of the treaded surface 35 which has been abrased from the tire, i.e. which has been removed from the tire 34 during the regular or irregular wear.

A different thickness indicated by different color levels indicates a considerable wear, whereas a thin structure in the representation refers to a smaller wear and, thus, to smaller portions removed from the tire surface caused by abrasion during running. In Fig. 8 the color-coded representation shows the thickness of the worn portions of the treaded surface 35 of the tire 34. The arrangement of Fig. 8 shows a cross-sectional view of the worn portion of the treaded surface 35, and in a similar manner as shown in Fig. 6B, this can also be presented after a corresponding data evaluation and the generation of a three-dimensional data set as a three-dimensional image.

The block of abrased material of the tire 34 according to Fig. 8 can also be color-coded in a vertical manner, assigning in the vertical manner a particular color (Fig. 6A) to the thickness of the removed material measured.

According to a third embodiment of the present invention the generated three-dimensional data set can be arranged as a three-dimensional image of the tire 34 and the wear thereof in a perspective view.

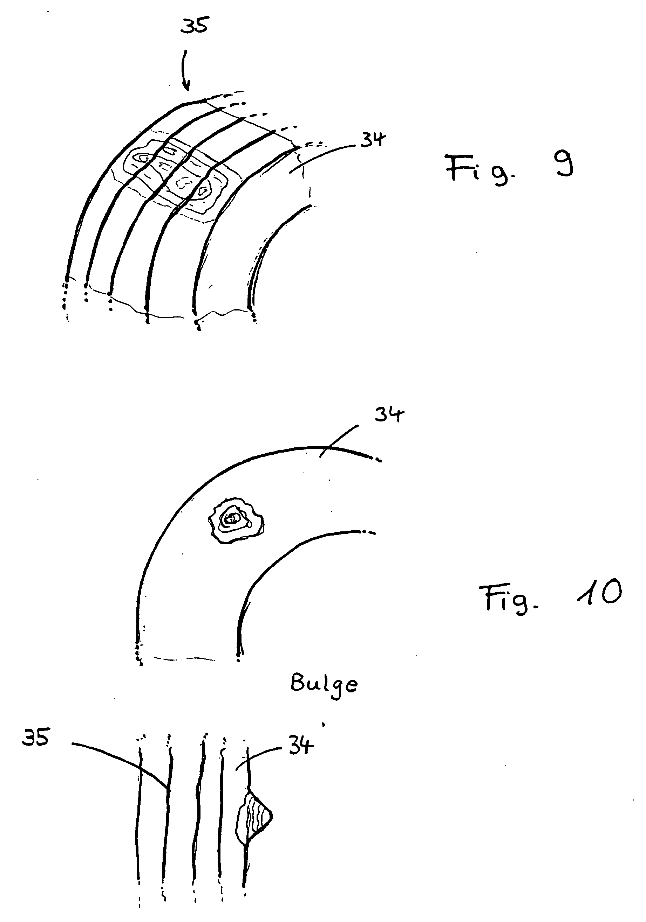

Fig. 9 shows the arrangement of a wheel assembly 14 mainly comprising the tire 34 and the rim 20. The tire 34 arranged on the rim 20 has a certain wear pattern which relates to a flat spot.

When the tire 34 is scanned by at least one revolution of the wheel assembly 14, the flat spot is detected and this specific portion can be presented in a three-dimensional (perspective) view in conjunction with the color-coded display. The assignment of different colors to particular heights detected during the measurement process (one revolution of the wheel assembly 14) basically corresponds to the color-coding concept shown in Fig. 6A. Hence, Fig. 9 is also based on an unambiguous assignment of certain colors to particular heights (and height sections) of the measured treaded surface 35 of the tire 34.

In this specific case, the color-coding according to the present invention and the three-dimensional representation as, for example, shown in Fig. 9 allows an easy recognition of a specific condition of the tire 34 of the wheel assembly 14 to be examined.

In a similar manner, Fig. 10 shows a three-dimensional representation of a bulge occurring on a tire 34. Specifically, the bulge of the tire 34 constitutes a portion protruding from the regular shape and size of the sidewall of the tire 34 and usually results from an unintended contact of the tire 34 of the wheel assembly 14 with a curbstone typically arranged at the left or right borderline of a road.

Even if the bulge at the sidewall of the tire 34 does not have a greater significance, the color-coded display in a three-dimensional and perspective manner allows a clear and easy recognition of even a small bulge and, thus, bringing this particular or beginning damage of the tire 34 to the operator's attention.

In conjunction with the representation of Fig. 6A showing the allocation of a certain color to a particular height or height section, this color-coding concept is basically used for obtaining a three-dimensional representation of the bulge for easy recognition.

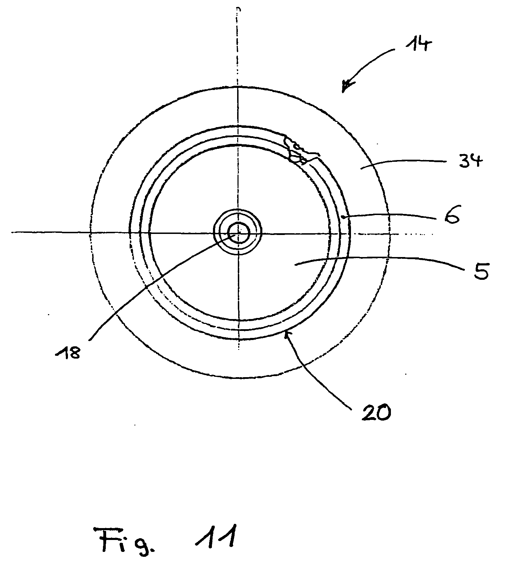

According to a further embodiment of the present invention, another measuring result and corresponding representation of the wheel assembly 14 are discussed. While the previously described examples refer to any condition of the tire 34 arranged on the rim 20 and forming part of the wheel assembly 14, Fig. 11 shows a three-dimensional representation of a damage of the rim (rim scratch) which may occur in the same manner as the bulge of the tire 34, that is, when the wheel assembly 14 unintentionally seriously contacts a curbstone or any other corresponding obstacle arranged at one side of the road on which the vehicle is travelling.

It is assumed according to Fig. 11 that contacting the curbstone by the wheel assembly causes a serious impact on the wheel assembly 14, and the curbstone with one of its corners seriously hits the rim 20 of the wheel assembly 14.

According to Fig. 11, the illustration shows that a small piece of the rim has broken away, and this leads to different heights at the damaged position. The scanning of the wheel assembly 14 and more specifically the scanning of the rim 20 reveals that, in comparison to the (original) shape of the rim 20 without damages, the damaged portion of the rim can exactly be described and illustrated by the three-dimensional representation which facilitates the recognition of this kind of damage provided to the rim 20.

The color-coding concept for indicating the different heights at the damaged position of the rim 20 is basically the same as described in conjunction with Fig. 6A, resulting in a three-dimensional representation based on the detected (scanned) data (height information) and the generated three-dimensional data set.

The present invention therefore provides the representation (image) of a topography detected, and specifically the three-dimensional representation of a scannable surface on a display apparatus in combination with a specific color-coding. The perspective view provides an accurate geometrical representation which indicates relationship between a different element of a surface under testing (surface of interest, scanned surface), so that the user can easily get from such a representation a complete information about height differences and, thus, of the condition of the scannable surface. The heights and areas can be depicted in a different scale or standard to make differences in height more identifiable. This is supported by using the color-coded display as described above in view of various embodiments. The generated three-dimensional data set makes it possible to obtain a cross-sectional view of the three-dimensional representation or a complete three-dimensional representation.

This allows the monitoring of differences about the wear of the tire and the wheel assembly or damages occurring when the wheel assembly hits a curbstone or any further obstacle on or beside the road. The display of the heights of the treaded surface 35 of the tire 34 can be supplemented by a display of the portions of the tire 34 which have been removed to indicate the removed portion during wear in comparison to the ideal (new) shape of the tire 34.

An exceptional wear or damage condition can easily be recognized by the operator. This provides a safety aspect since any small difference of the shape of the tire 34 in comparison to the ideal shape such as a beginning bulge, can be clearly visualized and is therefore easily identifiable.

The present non-contact condition detection apparatus for analysis of the condition of a wheel assembly may also be used for the detection of a tire match condition to be carried out when tires are mounted to a rim to obtain a desired wheel assembly.

The scanning of the scannable surface, preferably in the form of the surface of the tire (treaded surface and sidewalls) and the surface of the rim 20 can be carried out by scanning by the light of the emitter sources 116 according to a line over the surfaces of the wheel assembly 13 basically parallel to the wheel axis (rotational axis) 3. The scanning can also be carried out in an area of a predetermined width, for example on the treaded surface 35 of the tire 34.

The apparatus for determining the condition of a wheel assembly can further be used as a part of a testing device for testing the shape and condition of a wheel assembly of a vehicle after manufacturing or after mounting the tire on the rim. When predetermined data reflecting a new condition or an ideal condition of the wheel assembly are stored beforehand, the apparatus can be controlled to auto-matically or semi-automatically check a shape and condition of the wheel assembly mounted to the testing device, and can compare the detected results (actual condition of the wheel assembly) with the ideal shape and condition of the wheel assembly. Deviations can be determined, specifically when deviations between the detected results and the stored data exceed a predetermined value. Such detection can be notified to the operator or user to indicate an undesired deterioration of a production quality or mounting precision of the wheel assembly.

While the present invention has been illustrated and described in detail in the drawings and foregoing description, such illustrations and descriptions are to be considered illustrative or exemplary and not restrictive, and the present invention is not limited to the disclosed embodiments.

Other variations to the disclosed embodiments can be understood and effected by those skilled in the art in practising the claimed invention, from a study of the drawings, the disclosure, and the appended claims.

## Claims

1. An apparatus for determining the condition of a wheel assembly (14) including at least a rim (20) and a tire (34),
the apparatus comprising:
an emitter source (22) for emitting radiation signals towards the wheel assembly,
at least one detector (24) for receiving signals reflected from said wheel assembly In response to the emitted radiation signals,
a data processing device (26) connected to said emitter source and said at least one detector for processing data, wherein said data processing device is configured to perform the steps of:
obtaining height information including respective heights of a plurality of points located on the surface of the wheel assembly based on the signals received from the at least one detector,
obtaining a three-dimensional data set indicative of said height information, and
generating a surface profile of at least a part of the wheel assembly, based on the three-dimensional data set, and
displaying on a display means (30) said surface profile generated as a three-dimensional representation, wherein
said data processing device is configured for accessing information related to different colors assigned to different heights, and generating said surface profile of at least a part of the wheel assembly based on said three-dimensional data set and said assigned colors, **characterised in that** said three-dimensional representation indicates the differences between an actually measured height information of the tire and an ideal treaded surface of the tire in new condition.

2. Apparatus according to claim 1, wherein said surface profile covers the complete surface of the tire (34) and the surface of the rim (20).

3. Apparatus according to claim 1, wherein said emitter source (22) is adapted for obtaining said height information by scanning said surfaces of said wheel assembly (14) while said wheel assembly is rotated by at least one revolution.

4. Apparatus according to claim 3, wherein said data processing device (26) is adapted to classify the height information of the wheel assembly (14) into a plurality of height sections, and to assign to each of the plural height sections a predetermined color.

5. Apparatus according to claim 3, wherein said data processing means (26) is adapted to generate said surface profile of said tire (34) along the circumferential treaded surface (35) of said tire or at least a portion thereof.

6. Apparatus according to claim 4, wherein said data processing means (26) is adapted to generate said surface profile of said tire (34) along first and a second sidewalls (301 and 302) of said tire.

7. Apparatus according to claim 1, further comprising a rotary angle detector (17) for detecting a rotary angle of said wheel assembly (14).

8. Apparatus according to claim 7, wherein said emitter source (22) is adapted to emit radiation signals towards the wheel assembly (14) and said at least one detector (24) is adapted for receiving signals reflected from said wheel assembly depending upon the actual rotational angle detected by said rotary angle detector (17).

9. Apparatus according to one of claims 1 to 8, wherein said data processing device (26) is adapted for controlling the operation of said emitter source (22) and said at least one detector (24), and is adapted for controlling the rotation of said wheel assembly (14) depending upon the operation of said emitter source and said at least one detector.

10. Wheel balancing apparatus, including a mounting means (16) to which a wheel assembly (14) having a rim (20) and a tire (34) is rotatably mounted on a measuring shaft (18) extending from the mounting means, and an apparatus (10) for determining the condition of the wheel assembly according to any one of claims 1 to 9.

## Patentansprüche

1. Vorrichtung zum Bestimmen des Zustandes einer Radanordnung (14), die wenigstens eine Felge (20) und einen Reifen (34) aufweist,
die Vorrichtung enthält:
eine Emitterquelle (22) zum Emittieren von Strahlensignalen in Richtung der Radanordnung,
wenigstens einen Detektor (24) zum Empfangen von Signalen, die von der Radanordnung in Reaktion auf die emittierten Strahlensignale reflektiert werden,
eine Datenverarbeitungseinrichtung (26), die mit der Emitterquelle und dem wenigstens einen Detektor zum Verarbeiten von Daten verbunden ist, wobei die Datenverarbeitungseinrichtung in der Lage ist, die folgenden Schritte auszuführen:
Erhalten von Höheninformationen, die entsprechende Höhenangaben von einer Vielzahl von Punkten einschließen, die auf der Oberfläche der Radanordnung liegen, basierend auf den Signalen, die von dem wenigstens einen Detektor empfangen werden,
Erhalten eines dreidimensionalen Datensatzes, der auf die Höheninformation hinweist, und
Generieren eines Oberflächenprofils von zumindest einem Teil der Radanordnung basierend auf dem dreidimensionalen Datensatz, sowie
Ausgeben des Oberflächenprofils, generiert als dreidimensionale Darstellung, auf einem Ausgabemittel (30), wobei
die Datenverarbeitungseinrichtung konfiguriert ist für das Zugreifen auf Informationen, die verschiedenen Farben, verbunden mit verschiedenen Höhen, zugeordnet sind, und Generieren des Oberflächenprofils von wenigstens einem Teil der Radanordnung basierend auf dem dreidimensionalen Datensatz und den zugeordneten Farben,
**dadurch gekennzeichnet, dass**
die dreidimensionale Darstellung auf die Unterschiede zwischen einer tatsächlich gemessenen Höheninformation des Reifens und einer optimal profilierten Oberfläche des Reifens im Neuzustand hinweist.

2. Vorrichtung nach Anspruch 1, wobei
das Oberflächenprofil die gesamte Oberfläche des Reifens (34) und die Oberfläche der Felge (20) abdeckt.

3. Vorrichtung nach Anspruch 1, wobei
der Emitterquelle (22) geeignet ist, die Höheninformationen durch Abtasten der Oberflächen der Radanordnung (14) zu erhalten, während die Radanordnung wenigstens um eine Umdrehung gedreht wird.

4. Vorrichtung nach Anspruch 3, wobei
die Datenverarbeitungseinrichtung (26) geeignet ist, die Höheninformationen der Radanordnung (14) in eine Vielzahl an Höhensektoren zu klassifizieren, und jedem der Vielzahl an Höhensektoren eine vorbestimmte Farbe zuzuweisen.

5. Vorrichtung nach Anspruch 3, wobei
die Datenverarbeitungseinrichtung (26) geeignet ist, das Oberflächenprofil des Reifens (34) entlang des Umfangs der profilierten Oberfläche (35) des Reifens oder wenigstens einem Teil hiervon zu erzeugen.

6. Vorrichtung nach Anspruch 4, wobei
die Datenverarbeitungseinrichtung (26) geeignet ist, das Oberflächenprofil des Reifens (34) entlang einer ersten und einer zweiten Seitenwand (301 und 302) des Reifens zu erzeugen.

7. Vorrichtung nach Anspruch 1, ferner enthaltend
einen Drehwinkelaufnehmer (17) zum Aufnehmen eines Drehwinkels der Radanordnung (14).

8. Vorrichtung nach Anspruch 7, wobei
die Emitterquelle (22) geeignet ist, Strahlensignale in Richtung der Radanordnung (14) zu emittieren, und der wenigstens eine Detektor (24) geeignet ist, die Signale zu empfangen, welche von der Radanordnung reflektiert werden, in Abhängigkeit des gegenwärtigen Drehwinkels, aufgenommen durch den Drehwinkelaufnehmer (17).

9. Vorrichtung nach einem der Ansprüche 1 bis 8, wobei
die Datenverarbeitungseinrichtung (26) geeignet ist, den Betrieb der Emitterquelle (22) und des wenigstens einen Detektors (24) zu kontrollieren, und weiter geeignet ist, die Drehung der Radanordnung (14) in Abhängigkeit des Betriebs der Emitterquelle und des wenigstens einen Detektors zu kontrollieren.

10. Radausgleichsvorrichtung, enthaltend
ein Montagemittel (16), an dem eine Radanordnung (14), die eine Felge (20) und einen Reifen (34) aufweist, drehbar auf einer Messwelle (18) montiert wird, die sich aus dem Montagemittel (16) erstreckt, und eine Vorrichtung (10) zum Bestimmen des Zustands der Radanordnung nach einem der Ansprüche 1 bis 9.

## Revendications

1. Dispositif pour déterminer l'état d'un ensemble (14) de roue comprenant au moins une jante (20) et un pneumatique (34),
le dispositif comprenant :
une source (22) formant émetteur pour émettre des signaux de rayonnement en direction de l'ensemble de roue,
au moins un détecteur (24) pour recevoir des signaux réfléchis par l'ensemble dé roue en réaction aux signaux de rayonnement émis,
un dispositif (26) de traitement de données, relié à la source formant émetteur et au au moins un détecteur pour traiter des données, le dispositif de traitement de données étant configuré pour effectuer les stades, dans lesquels :
on obtient une information de hauteur, comportant des hauteurs respectives d'une pluralité de points placés sur la surface de l'ensemble de roue, sur la base des signaux reçus par le au moins un détecteur,
on obtient un jeu de données en trois dimensions, indicateur de l'information de hauteur, et
on produit un profil de surface d'au moins une partie de l'ensemble de roue sur la base du jeu de données en trois dimensions, et
on affiche, sur un moyen (30) d'affichage, le profil de surface produit sous la forme d'une représentation en trois dimensions, dans lequel
le dispositif de traitement de données est configuré pour accéder à de l'information se rapportant à des couleurs différentes, affectées à des hauteurs différentes et pour produire le profil de surface d'au moins une partie de l'ensemble de roue sur la base du jeu de données en trois dimensions et des couleurs affectées, **caractérisé en ce que** la représentation en trois dimensions indique les différences entre une information de hauteur mesurée en fait du pneumatique et d'une surface idéale rechappée du pneumatique en un nouvel état.

2. Dispositif suivant la revendication 1, dans lequel le profil de surface couvre la surface complète du pneumatique (34) et la surface de la jante (20).

3. Dispositif suivant la revendication 1, dans lequel la source (22) formant émetteur est conçue pour obtenir l'information de hauteur en balayant les surfaces de l'ensemble (14) de roue, alors que l'ensemble de roue tourne d'au moins un tour.

4. Dispositif suivant la revendication 3, dans lequel le dispositif (26) de traitement de données est conçu pour classer l'information de hauteur de l'ensemble (14) de roue en une pluralité de sections de hauteur et pour affecter une couleur déterminée à l'avance à chacune de la pluralité de sections de hauteur.

5. Dispositif suivant la revendication 3, dans lequel le moyen (26) de traitement de données est conçu pour produire le profil de surface du pneumatique (34) le long de la surface (35) circonférentielle rechappée du pneumatique ou le long d'au moins l'une de ses parties.

6. Dispositif suivant la revendication 4, dans lequel le moyen (26) de traitement de données est conçu pour produire le profil de surface du pneumatique (34) le long d'une première et d'une deuxième parois (301 et 302) latérales du pneumatique.

7. Dispositif suivant la revendication 1, comprenant, en outre, un détecteur (17) d'angle de rotation pour détecter un angle de rotation de l'ensemble (14) de roue.

8. Dispositif suivant la revendication 7, dans lequel la source (22) formant émetteur est conçue pour émettre des signaux de rayonnement en direction de l'ensemble (14) de roue et le au moins un détecteur (24) est conçu pour recevoir des signaux réfléchis par l'ensemble de roue en fonction de l'angle de rotation instantané détecté par le détecteur (17) d'angle de rotation.

9. Dispositif suivant l'une des revendications 1 à 8, dans lequel le dispositif (26) de traitement de données est conçu pour commander le fonctionnement de la source (22) formant émetteur et le au moins un détecteur (24) et est conçu pour commander la rotation de l'ensemble (14) de roue en fonction du fonctionnement de la source formant émetteur et du au moins un détecteur.

10. Dispositif d'équilibrage de roue, comprenant un moyen (16) de montage, auquel un ensemble (14) de roue ayant une jante (20) et un pneumatique (34) est monté à rotation sur un arbre (18) de mesure s'étendant à partir du moyen de montage et un dispositif (10) pour déterminer l'état de l'ensemble de roue suivant l'une quelconque des revendications 1 à 9.
